# EUROPÄISCHE PATENTANMELDUNG

(11) **EP 2 388 543 A2**
(43) Veröffentlichungstag der Anmeldung: **23.11.2011**
(21) Anmeldenummer: 11003484.0
(22) Anmeldetag: 28.04.2011
(51) Int. Cl.: F26B 17/14, F26B 23/04

(54) **Vorrichtung zum Trocknen von Schüttgut in wenigstens einem Vorratsbehälter**

(30) Priorität: 20.05.2010 DE 102010021742
(71) Anmelder: Motan Holding GmbH, 78467 Konstanz (DE)
(72) Erfinder: Kühnau, Holger, 78465 Konstanz (DE); Herro, Reinhard, 87439 Kempten (DE)
(74) Vertreter: Kohl, Karl-Heinz

(57) **Zusammenfassung**

Schüttgut (16) wird vor seiner Verarbeitung im Vorratsbehälter (15) getrocknet. Hierzu wird ein Trocknungsmedium, vorzugsweise Luft, durch das Schüttgut (16) geleitet. Das Trocknungsmedium erwärmt das Schüttgut (16) und entzieht ihm gleichzeitig Feuchtigkeit. Zum Entfeuchten des Trocknungsmediums ist eine Entfeuchtungseinheit (10) mit wenigstens einem Peltierelement (26) vorgesehen, dessen Kalt- und dessen Warmseite im Strömungsweg des Trocknungsmediums liegen. Das mit Feuchtigkeit beladene Trocknungsmedium wird längs der Kaltseite vorbeigeleitet und entfeuchtet. Über die Warmseite des Peltierelementes (26) kann das entfeuchtete Trocknungsmedium vorerwärmt werden.

## Beschreibung

Die Erfindung betrifft eine Vorrichtung zum Trocknen von Schüttgut in wenigstens einem Vorratsbehälter nach dem Oberbegriff des Anspruches 1.

Schüttgut wird vor seiner Verarbeitung im Vorratsbehälter getrocknet, wozu ein Trocknungsmedium, vorzugsweise Luft, durch das Schüttgut geleitet wird. Das Trocknungsmedium erwärmt das Schüttgut und entzieht ihm gleichzeitig Feuchtigkeit. Das mit der Feuchtigkeit beladene Trocknungsmedium verlässt den Vorratsbehälter über die Auslassleitung. Diese sogenannte Rückluft wird anschließend durch ein Trockenmittel geleitet, um das Trocknungsmedium wieder zu entfeuchten und dem Schüttgut zuzuführen. Um die Feuchtigkeit aus dem Trocknungsmedium zu entfernen, werden Kältemaschinen herkömmlicher Bauart eingesetzt, mit denen das Trocknungsmedium zur Entfernung der Feuchtigkeit gekühlt wird. Teilweise wird auch die warme Abluft der Kältemaschine herangezogen, um das Trocknungsmedium nach dem Entfeuchtungsvorgang wieder zu erwärmen, um es dem Schüttgut erneut zuzuführen. Solche Kältemaschinen sind nicht nur teure Anlagenteile, sondern benötigen auch erheblichen Raum.

Der Erfindung liegt die Aufgabe zugrunde, die gattungsgemäße Vorrichtung so auszubilden, dass in konstruktiv einfacher Weise bei geringem Kosten-und Bauaufwand das Trocknungsmedium nach dem Durchgang durch das Schüttgut entfeuchtet werden kann.

Diese Aufgabe wird bei der gattungsgemäßen Vorrichtung erfindungsgemäß mit den kennzeichnenden Merkmalen des Anspruches 1 gelöst.

Bei der erfindungsgemäßen Vorrichtung ist die Entfeuchtungseinheit mit wenigstens einem Peltierelement versehen, dessen Kalt- und dessen Warmseite im Strömungsweg des Trocknungsmediums liegen. Durch Anlegen einer elektrischen Spannung an das Peltierelement bildet sich die Kalt-und die Warmseite am Peltierelement. An der Kaltseite können Temperaturen weit unterhalb des Gefrierpunktes von Wasser, zum Beispiel -40°C, erzeugt werden. Wird das mit Feuchtigkeit beladene Trocknungsmedium längs der Kaltseite des Peltierelementes vorbei geleitet, erfolgt der Entfeuchtungsvorgang. Es können hierbei zwei Stufen von trockenem Trocknungsmedium erzeugt werden. Erfolgt an der Kaltseite des Peltierelementes eine reine Kondensation der im Trocknungsmedium enthaltenen Feuchtigkeit, werden Taupunkte oberhalb des Gefrierpunktes von Wasser erreicht. Es ist aber auch möglich, die Feuchtigkeit aus dem Trocknungsmedium an der Kaltseite des Peltierelementes durch Gefrieren zu entfernen. Hierbei werden Taupunkte weit unterhalb des Gefrierpunktes von Wasser erreicht.

An der Warmseite des Peltierelementes kann das entfeuchtete Trocknungsmedium wieder erwärmt werden, so dass eine Vorerwärmung des entfeuchteten Trocknungsmediums erreicht werden kann. Dadurch wird in erheblichem Maße Energie für den Trocknungsvorgang eingespart.

Die Peltierelemente selbst sind kleine plattenförmige Elemente mit geringen Abmessungen. Die typischen Abmessungen der Peltierelemente liegen zwischen etwa 55 bis 100 mm Breite, etwa 55 bis 100 mm Höhe und etwa 4 mm Tiefe. Die Peltierelemente nehmen somit wenig Raum in Anspruch, so dass die Entfeuchtungseinheit kompakt ausgebildet sein kann. Die Entfeuchtungseinheit ist problemlos im Betrieb und ermöglicht dennoch eine zuverlässige Trocknung des Trocknungsmediums.

Die Kalt- und die Warmseite des Peltierelementes sind vorteilhaft Teil jeweils eines Wärmetauschers. Beim Durchgang des Trocknungsmediums durch diese Wärmetauscher lässt sich die Wärme und Kälte zuverlässig an das Trocknungsmedium übertragen. Vorteilhaft werden hierbei Kühlkörper aus Aluminium oder beliebigen anderen Materialien eingesetzt, mit denen die Wärme bzw. Kälte optimal an das Trocknungsmedium übertragen werden kann.

Mit der Entfeuchtungseinheit ist vorteilhaft die Zuführleitung strömungsverbunden, über die das in der Entfeuchtungseinheit entfeuchtete Trocknungsmedium dem Vorratsbehälter unmittelbar nach dem Entfeuchtungsprozess zugeführt werden kann.

Vorteilhaft ist die Entfeuchtungseinheit auch mit der Auslassleitung des Vorratsbehälters strömungsverbunden. Das mit Feuchtigkeit beladene Trocknungsmedium wird dabei nach dem Durchströmen des Schüttgutes im Vorratsbehälter direkt der Entfeuchtungseinheit zugeführt und dort entfeuchtet.

Es ist möglich, an die Entfeuchtungseinheit wenigstens eine Ansaugleitung für Außenluft anzuschließen. Die angesaugte Außenluft, die in der Regel mit Feuchtigkeit beladen ist, wird somit in der Entfeuchtungseinheit entfeuchtet, bevor sie als Trocknungsmedium dem Vorratsbehälter zugeführt werden kann. Eine solche Ausbildung ist besonders vorteilhaft in asiatischen Gebieten einsetzbar, in denen die Außenluft einen hohen Feuchtegehalt aufweist. Mittels der Entfeuchtungseinheit lässt sich diese Außenluft wirksam so weit entfeuchten, dass sie als Trocknungsmedium zum Trocknen des Schüttgutes im Vorratsbehälter herangezogen werden kann.

Eine besonders günstige Ausbildung ergibt sich, wenn die Entfeuchtungseinheit in einem Kreislauf des Trocknungsmediums liegt. Dann kann das Trocknungsmedium im Kreislauf durch die erfindungsgemäße Vorrichtung geführt werden. Nach Durchströmen des Schüttgutes wird das mit Feuchtigkeit beladene Trocknungsmedium der Entfeuchtungseinheit zugeführt und dort entfeuchtet. Anschließend wird das so entfeuchtete Trocknungsmedium erneut durch das Schüttgut geleitet, um Feuchtigkeit aus dem Schüttgut aufzunehmen.

Um eine hohe Effektivität zu erreichen, ist es von Vorteil, wenn die Vorrichtung wenigstens zwei Entfeuchtungseinheiten aufweist. Hierbei ist es vorteilhaft, wenn die beiden Entfeuchtungseinheiten so eingebunden sind, dass die eine Entfeuchtungseinheit einem Enteisungsprozess unterworfen werden kann, während die andere Entfeuchtungseinheit parallel zu diesem Enteisungsprozess weiterhin zum Entfeuchten des Trocknungsmediums eingesetzt werden kann. Mit der Zeit tritt nämlich an der Kaltseite des Peltierelementes eine Vereisung auf, die entfernt werden muss, um eine optimale Entfeuchtung durchführen zu können. Infolge der beschriebenen vorteilhaften Ausgestaltung kann dieser Enteisungsprozess ausgeführt werden, ohne den Entfeuchtungsprozess zu unterbrechen.

Vorteilhaft lässt sich der Strömungsweg des Trocknungsmediums hierbei durch Ventile umschalten.

Um die Temperaturdifferenz zu erhöhen, ist es vorteilhaft, mehrere Peltierelemente einzusetzen, die sowohl hintereinander als auch hinter- und nebeneinander in der Entfeuchtungseinheit angeordnet sein können.

Weitere Merkmale der Erfindung ergeben sich aus den weiteren Ansprüchen, der Beschreibung und den Zeichnungen.

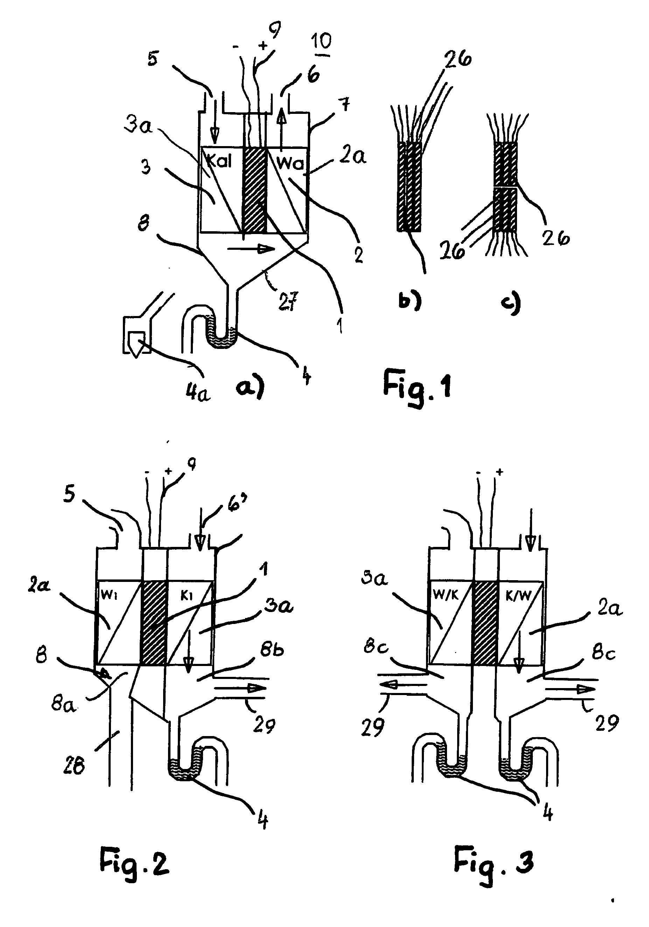

Die Erfindung wird nachstehend anhand mehrerer in den Zeichnungen dargestellter Ausführungsformen näher erläutert. Es zeigt
- Fig. 1 a): Eine Entfeuchtungseinheit der erfindungsgemäßen Vorrichtung zum Trocknen von Schüttgut,
- Fig. 1 b) und Fig. 1 c): verschiedene Anordnungen von Peltierelementen der Entfeuchtungseinheit gemäß Fig. 1a,
- Fig. 2 und Fig. 3: weitere Ausführungsbeispiele von Entfeuchtungseinheiten,
- Fig. 4 bis Fig. 8: verschiedene Ausführungsformen von erfindungsgemäßen Vorrichtungen,
- Fig. 9 und Fig. 10: eine weitere Ausführungsform einer Entfeuchtungseinheit in zwei unterschiedlichen Arbeitsstellungen,
- Fig. 11 und Fig. 12: eine weitere Ausführungsform einer erfindungsgemäßen Vorrichtung in zwei unterschiedlich geschalteten Stellungen der zugehörigen Entfeuchtungseinheiten,
- Fig. 13 und Fig. 14: eine weitere Ausführungsform einer erfindungsgemäßen Vorrichtung, deren zugehörige Entfeuchtungseinheiten zwei unterschiedliche Schaltstellungen einnehmen,
- Fig. 15 und Fig. 16: in Darstellung entsprechend den Fig. 13 und 14 eine weitere Ausführungsform einer erfindungsgemäßen Vorrichtung.

Anhand der Fig. 1 bis 3 wird das Prinzip der erfindungsgemäßen Vorrichtung zur Trocknung von Schüttgut erläutert. Zur Trocknung des Schüttgutes werden Entfeuchtungseinheiten 10 eingesetzt, die wenigstens ein Peltierelement aufweisen. Die Entfeuchtungseinheit 10 hat ein Gehäuse 7, das durch eine Trennwand 1 in zwei Strömungsräume 2, 3 unterteilt ist. Die Trennwand 1 ist mit wenigstens einem Peltierelement 26 versehen. Wie die Fig. 1b und 1c zeigen, können mehrere Peltierelemente 26 hintereinander (Fig. 1 b) oder auch hinter- und nebeneinander (Fig. 1 c) angeordnet sein. Bei Einsatz mehrerer Peltierelemente 26 ist eine Erhöhung der Temperaturdifferenz möglich.

Peltierelemente haben die Eigenschaft, dass beim Anlegen eines Stroms die eine Flachseite erwärmt und die andere abgekühlt wird.

Beim Ausführungsbeispiel nach Fig. 1 a befindet sich die kalte Seite des Peltierelementes 26 im Strömungsraum 3 und die warme Seite im Strömungsraum 2. Aufgrund der unterschiedlichen Temperaturen auf beiden Seiten des Peltierelementes 26 besteht die Möglichkeit, die Peltierelemente als Teil von Wärmetauschern 2a, 3a einzusetzen. Über die Wärmetauscher 2a, 3a kann die Wärme bzw. die Kälte an das jeweils zu trocknende Gas übertragen werden. Die Kühlkörper der Wärmetauscher 2a, 3a bestehen vorteilhaft aus Aluminium. Sie können aber auch aus anderen geeigneten Materialien bestehen, welche die Wärme bzw. die Kälte gut an das zu trocknende Gas übertragen.

In den Strömungsraum 3 mündet eine Eintrittsöffnung 5, über die das zu trocknende Gas in Pfeilrichtung eintritt. Es strömt von oben nach unten durch den Wärmetauscher 3a. Die Strömungsrichtung kann auch von unten nach oben oder quer verlaufen, wenn es für den Trocknungsprozess zweckmäßig ist. Die im Gas enthaltene Feuchtigkeit schlägt sich auf der kalten Fläche des Wärmetauschers 3a durch Kondensation nieder. Gleichzeitig wird das Gas hierbei gekühlt. Nach Durchströmen des Wärmetauschers 3a tritt das Gas in einen Strömungsraum 8 ein, in dem das entfeuchtete Gas in Richtung auf den Wärmetauscher 2a strömt. An ihm strömt das Gas aufwärts und gelangt nach Durchströmen des Wärmetauschers zu einem Auslass 6, durch den das Gas aus dem Gehäuse 7 austritt. Dem Wärmetauscher 2a ist die Warmseite des Peltierelementes 26 zugeordnet, so dass das Gas beim Durchströmen des Wärmetauschers 2a durch die Warmseite des Peltierelementes 26 erwärmt wird. Das erwärmte, aus dem Auslass 6 strömende Gas wird in noch zu beschreibender Weise einem Schüttgutbehälter zugeführt, in dem das zu trocknende Schüttgut liegt. Da zur Trocknung des Schüttgutes das erwärmte Gas eingesetzt wird, kann die gesamte Energie einschließlich der Verluste aufgrund des Wirkungsgrads des Peltierelementes 26 genutzt werden. Die Energie dient sowohl zum Entfeuchten des Gases mit Hilfe des Wärmetauschers 3a als auch zur Erwärmung des Gases mit Hilfe des Wärmetauschers 2a.

Die Feuchte, die sich am Wärmetauscher 3a absetzt, bildet durch Anreicherung Tropfen, die nach unten aus dem Wärmetauscher 3a austreten und in den unteren Strömungsraum 8 fallen. Da der Strömungsraum 8 sich nach unten konisch verjüngt, laufen die Kondenstropfen längs der schrägen Wand 27 nach unten in ein Auslassrohr 4. Im dargestellten Ausführungsbeispiel ist es als Siphonrohr ausgebildet, wodurch sichergestellt ist, dass der Strömungs/Sammelraum 8 beim Ablassen des im Raum 8 gesammelten Kondensates luftdicht bleibt.

Anstelle des Siphonrohres 4 kann auch jede andere geeignete Einrichtung eingesetzt werden, zum Beispiel ein Schwimmerventil 4a, mit dem ebenfalls das gesammelte Kondensat abgelassen werden kann.

Mit Hilfe des wenigstens einen Peltierelementes 26 wird das Gas durch Kondensation und/oder Gefrieren der im Gas mitgeführten Feuchte getrocknet und auf diese Weise Trockengas, vorzugsweise Trockenluft, erzeugt, mit dem in noch zu beschreibender Weise anschließend das Schüttgut entfeuchtet und erwärmt wird.

Durch Anlegen einer elektrischen Spannung an das Peltierelement 26 können an der Kaltseite Temperaturen weit unterhalb des Gefrierpunktes des Wassers erzeugt werden, zum Beispiel -40°C. Es werden dabei zwei Stufen von Trockenluft erzeugt. Bei einer reinen Kondensation der im Gas enthaltenen Feuchtigkeit werden Taupunkte oberhalb des Gefrierpunktes erreicht. Wird die Feuchtigkeit durch Gefrieren aus dem Gas entfernt, werden Taupunkte weit unter dem Gefrierpunkt von Wasser erreicht.

Die Peltierelemente 26 erfüllen in der beschriebenen Weise eine Doppelfunktion: Das Gas wird zunächst durch Kühlen entfeuchtet und dann nach dem Entfeuchtungsvorgang mit der Warmseite der Peltierelemente 26 aufgeheizt. Auf diese Weise wird insbesondere Energie zum Trocknen des Schüttgutes eingespart. Darüber hinaus können aufgrund des Einsatzes der Peltierelemente 26 sehr kleine Trockengeräte gebaut werden.

Peltierelemente haben typische Abmessungen von 55 bis 100 mm Breite, 55 bis 100 mm Höhe und 4 mm Tiefe. Entsprechend der angelegten Spannung und der Leistung des verwendeten Peltierelementes 26 entsteht eine mehr oder weniger große Temperaturdifferenz zwischen den beiden Flachseiten des Peltierelementes. Um diese Temperaturdifferenz zu vergrößern, können mehrere Peltierelemente hintereinander geschaltet werden.

Soll das Gas auf sehr geringe Restfeuchte getrocknet werden, werden die Peltierelemente 26 so ausgelegt, dass sehr tiefe Temperaturen von zum Beispiel -40°C erreicht werden. Die im Gas enthaltene Feuchtigkeit wird dann nicht nur an den Wänden des Wärmetauschers 3a kondensiert; die Feuchtigkeit bildet auch Reif an den Wänden. Mit zunehmender Einsatzdauer wird die Kaltseite der Peltierelemente 26 durch die Eisbildung zugesetzt. Darum muss diese Kaltseite der Peltierelemente von Zeit zu Zeit enteist werden. Vorteilhaft ist es in diesem Falle, die Zugangsleitungen 9 der Peltierelemente 26 umzupolen. Dann wird die bisherige Kaltseite die Warmseite der Peltierelemente, wodurch das auf ihnen sich bildende Eis schmilzt.

Die vom Peltierelement 26 abgegebene Wärme kann wiederum auch zur Erwärmung des Gases vor der Trocknung des Schüttgutes genutzt werden.

Die Kaltseite der Peltierelemente 26 kann auch passiv enteist werden. Hierzu wird die warme, feuchte Abluft aus dem Schüttgutbehälter zunächst über die vereiste Kaltseite der Peltierelemente 26 geleitet, wodurch das Eis auf der Kaltseite aufgetaut wird. Außerdem wird hierbei das Gas vorgekühlt und auch schon Feuchte durch Kondensation aus dem Gas entfernt. Die hierbei frei werdende Kondensationswärme trägt dazu bei, das Eis auf der Kaltseite der Peltierelemente schnell aufzutauen. Anschließend wird das Gas vorteilhaft in einer weiteren Kammer durch Ausfrieren der Restfeuchte im Gas auf den benötigten Trockengehalt gebracht.

Wesentlich für den Betrieb ist, dass das Eis beim Auftauen nicht sublimiert, sondern sich verflüssigt und damit als Kondensat aus dem Trocknungsprozess ausgetragen werden kann. Dieses Kondensat, das sich durch Kondensation sowie durch Einfrieren und nachfolgendes Verflüssigen bildet, gelangt nach unten in den Sammelraum 8, aus dem das Kondensat in der beschriebenen Weise über das Siphonrohr 4 oder beispielhaft über das Schwimmerventil 4a abgelassen werden kann.

Fig. 2 zeigt die Möglichkeit, den Sammel/Strömungsraum 8 in zwei Räume 8a, 8b zu unterteilen. Der Raum 8a dient zur Ableitung der erwärmten Luft nach Durchströmen des Wärmetauschers 2a. Über die Leitung 28 wird die getrocknete und erwärmte Luft dem nachfolgenden Schüttgutbehälter zugeführt.

Im Raum 8b wird das beim Durchströmen des Wärmetauschers 3a gebildete Kondensat über das Auslassrohr 4 in der beschriebenen Weise aus dem Prozess ausgeschleust. Das Gas strömt nach dem Austritt aus dem Wärmetauscher 3a in ein quer anschließendes Rohr 29.

Bei der Ausführungsform nach Fig. 3 können die Peltierelemente 26 unabhängig voneinander umgepolt werden, so dass die Wärmetauscher 2a, 3a je nach Polung zum Erwärmen bzw. zum Abkühlen des Gases eingesetzt werden können. Um die auf der Kaltseite der Peltierelemente auftretende Eisbildung zu beseitigen, werden die Peltierelemente so gepolt, dass das Eis abgetaut wird und das sich bildende Kondensat nach unten in die voneinander getrennten Sammelräume 8c gelangt. Das Kondensat gelangt nach unten in die Auslassrohre 4, die beispielhaft jeweils als Siphonrohre ausgebildet sind. Das Gas selbst strömt in die seitlich abgehenden Rohre 29 aus dem jeweiligen Sammelraum 8c. Die Rohre 29 befinden sich in Strömungsrichtung des Gases hinter den Wärmetauschern 2a, 3a.

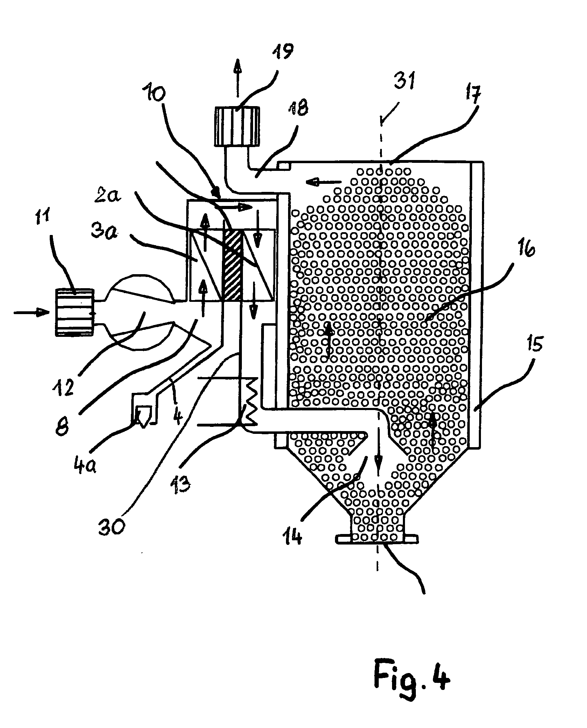

Fig. 4 zeigt eine Vorrichtung zum Trocknen des Schüttgutes 16 in einem Vorratsbehälter 15. Der Behälter 15 ist am oberen Ende mit wenigstens einem Auslass 18 für das Trocknungsmedium versehen. Es strömt durch einen Luftfilter 19 in die Umgebung.

Als Trocknungsmedium wird Außenluft verwendet, die mittels eines Gebläses 12 angesaugt wird. Die Außenluft strömt zunächst durch einen Luftfilter 11, bevor sie vom Gebläse 12 der Entfeuchtungseinheit 10 zugeführt wird. Die angesaugte Außenluft strömt von unten in den Wärmetauscher 3a der Entfeuchtungseinheit 10. Die in der Außenluft enthaltene Feuchtigkeit kondensiert und tropft nach unten in den Sammelraum 8. Von hier aus gelangt das Kondensat in das Auslassrohr 4, aus dem das Kondensat mit Hilfe des Schwimmerventils 4a abgelassen werden kann.

Die Luft wird nach Durchströmen des Wärmetauschers 3a rechtwinklig umgelenkt und gelangt in den Wärmetauscher 2a, den die Außenluft von oben nach unten durchströmt. Im Wärmetauscher 2a wird die entfeuchtete Außenluft erwärmt. Nach dieser Vorwärmung, in der die Abwärme des Entfeuchtungsprozesses genutzt wird, gelangt die entfeuchtete Außenluft in eine Zuführleitung 30, in der sich eine Heizeinrichtung 13 befindet. Mit ihr wird die Luft vor dem Eintritt in den Vorratsbehälter 15 auf die erforderliche Trocknungstemperatur erwärmt. Nahe dem unteren Ende ragt die Zuführleitung 30 senkrecht zur Behälterachse 31 in den Vorratsbehälter 15. Das freie Ende der Zuführleitung 30 ist zentrisch im Vorratsbehälter 15 angeordnet und nach unten gerichtet. Das Auslassende 14 der Zuführleitung 30 ist konisch ausgebildet und erweitert sich in Strömungsrichtung der Außenluft nach unten. Die erwärmte, entfeuchtete Außenluft tritt somit nahe dem unteren Ende nach unten in den Vorratsbehälter 15 ein. Im Schüttgut 16 strömt die Außenluft in Richtung der eingezeichneten Strömungspfeile aufwärts und nimmt hierbei infolge der Dampfdiffusionsdifferenz zwischen der trockenen Außenluft und dem feuchten Schüttgut 16 die im Schüttgut enthaltene Feuchtigkeit auf. Hierbei wird die Außenluft abgekühlt und strömt am oberen Ende des Vorratsbehälters 15 durch den Auslass 18 und den Luftfilter 19 nach außen.

Der Vorratsbehälter 15 ist am oberen Ende durch einen Deckel 17 geschlossen, der auch zum Umlenken der nach oben durch das Schüttgut 16 strömenden Luft in Richtung auf den Auslass 18 dient.

Da die Außenluft nach Durchströmen des Schüttgutes 16 in die Umgebung abgegeben wird, wird mit dieser Vorrichtung eine offene Prozessführung eingesetzt, bei der zum Trocknen des Schüttgutes 16 Außenluft verwendet wird. Eine solche offene Prozessführung ist für die Trocknung mit Gastaupunkten oberhalb von etwa 0°C gut geeignet.

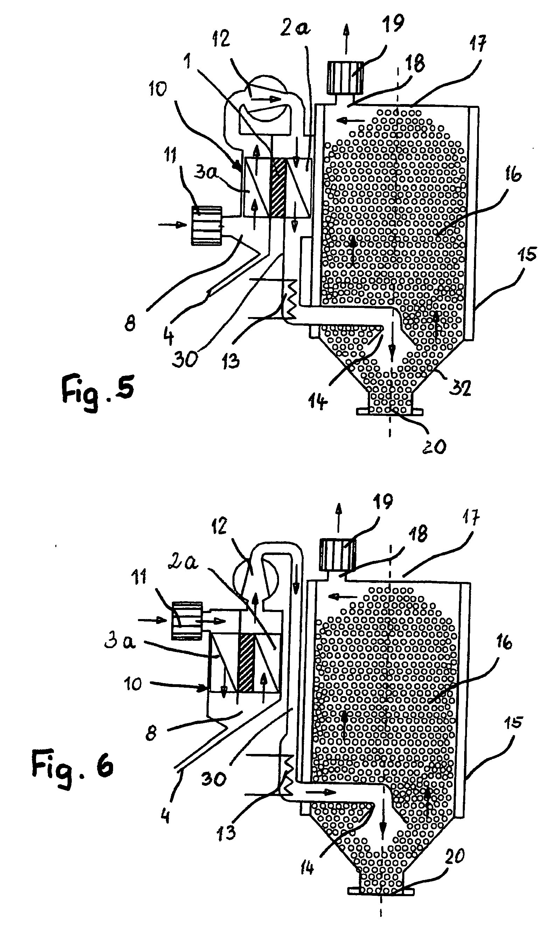

Bei der Ausführungsform nach Fig. 5 befindet sich das Gebläse 12, mit dem die Außenluft angesaugt wird, in Strömungsrichtung hinter der Entfeuchtungseinheit 10. Die angesaugte Luft durchströmt zunächst den Luftfilter 11 und gelangt in den Raum 8 der Entfeuchtungseinheit 10. Von hier aus durchströmt die Außenluft den Wärmetauscher 3a von unten nach oben. In Strömungsrichtung hinter diesem Wärmetauscher 3a befindet sich das Gebläse 12, das die durch den Wärmetauscher 3a entfeuchtete Außenluft dem Wärmetauscher 2a der Entfeuchtungseinheit 10 zuführt. Er wird von oben nach unten durchströmt und durch die Peltierelemente an der Trennwand 1 erwärmt. Die auf diese Weise entfeuchtete und vorgewärmte Außenluft strömt entsprechend der vorigen Ausführungsform in die an die Entfeuchtungseinheit 10 anschließende Zuführleitung 30. Die in ihr befindliche Heizeinrichtung 13 erwärmt die vorgewärmte, entfeuchtete Außenluft auf die zum Trocknen des Schüttgutes 16 im Vorratsbehälter 15 erforderliche Temperatur. Die Zuführleitung 30 ist in gleicher Weise wie beim Ausführungsbeispiel nach Fig. 4 ausgebildet, so dass die erwärmte Außenluft durch das trichterförmige Auslassende 14 nahe dem unteren Ende des Vorratsbehälters 15 in das Schüttgut 16 austritt. Die Luft strömt im Schüttgut 16 nach oben, erwärmt hierbei das Schüttgut 16 und nimmt dadurch Feuchtigkeit aus dem Schüttgut auf. Die Temperatur der erwärmten Außenluft ist nur so hoch, dass eine Schädigung des Schüttgutes 16 durch zu hohe Trocknungstemperatur zuverlässig vermieden wird.

Im Unterschied zu Ausführungsform nach Fig. 4, bei der der Auslass 18 nahe dem Deckel 17 an der Seitenwand des Vorratsbehälters 15 vorgesehen ist, befindet sich der Auslass 18 im vorliegenden Ausführungsbeispiel im Deckel 17. Die Außenluft strömt durch den Auslass 18 und den Luftfilter 19 in die Umgebung.

Das im Wärmetauscher 3a sich bildende Kondensat gelangt nach unten in den Sammelraum 8 und von dort in das Auslassrohr 4.

Der Vorratsbehälter 15 hat ein unteres, kegelförmig sich verjüngendes Ende 32, das durch einen Verschluss 20, der beispielsweise ein Schieber oder eine Klappe sein kann, verschlossen wird.

Beim Ausführungsbeispiel nach Fig. 6 befindet sich das Gebläse 12 ebenfalls in Strömungsrichtung hinter der Entfeuchtungseinheit 10. Die Außenluft strömt über den Luftfilter 1 in die Entfeuchtungseinheit 10. Die Luft strömt zunächst durch den Wärmetauscher 3a nach unten, gelangt in den Strömungsraum 8 und von dort in den Wärmetauscher 2a. Im Wärmetauscher 3a wird die Außenluft entfeuchtet. Das entstehende Kondensat fällt nach unten in den Sammelraum 8 und kann über das Auslassrohr 4 abgeführt werden. Im Wärmetauscher 2a wird die entfeuchtete Außenluft vorerwärmt und gelangt in die Zuführleitung 30. Mit der in der Zuführleitung 30 befindlichen Heizeinrichtung 13 wird die nach unten strömende Außenluft erwärmt und tritt über das Auslassende 14 in das Schüttgut 16 im Vorratsbehälter 15 ein. Die erwärmte Außenluft strömt im Schüttgut 16 nach oben und tritt über den Auslass 18 sowie den anschließenden Luftfilter 19 nach außen. Der Auslass 18 ist wie beim vorigen Ausführungsbeispiel im Deckel 17 nahe der Seitenwand des Behälters 15 vorgesehen. Beim Ausführungsbeispiel nach Fig. 6 ist das Gebläse 12 in Strömungsrichtung hinter dem Wärmetauscher 2a vorgesehen. Beim vorigen Ausführungsbeispiel befindet sich der Verdichter 12 in Strömungsrichtung hinter dem Wärmetauscher 3a sowie vor dem Wärmetauscher 2a.

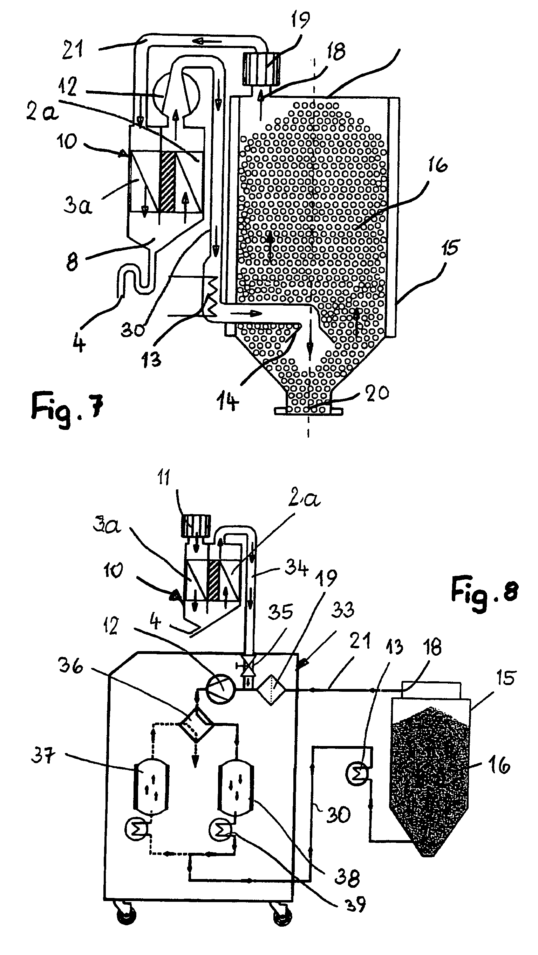

Bei der Ausführungsform nach Fig. 7 wird die Luft nach Durchströmen des Luftfilters 19 am Auslass 18 nicht an die Umgebung abgegeben, sondern der Entfeuchtungseinheit 10 zugeführt. Diese Vorrichtungen arbeiten mit einem geschlossenen Kreislauf und werden häufig über einen Klappdeckel 17 mit dem Schüttgut 16 von Hand befüllt. Nur bei der Öffnung des Klappdeckels 17 findet ein Luftaustausch zwischen dem Strömungsraum mit der Umgebung statt. Solche Ausführungsformen sind besonders dann geeignet, wenn das Schüttgut 16 im Vorratsbehälter 15 nur wenig Feuchtigkeit enthält. Dadurch nimmt die Luft beim Durchströmen des Schüttgutes 16 entsprechend wenig Feuchtigkeit auf, so dass die Rückluft wesentlich trockener ist als die alternativ verwendete Außenluft, die beispielsweise im asiatischen Raum eine erhebliche Feuchtigkeit aufweist. Der Energieverbrauch der Trocknungsvorrichtung aufgrund der geringen Feuchte der Rückluft ist somit sehr günstig.

Die Rückluft strömt vom Luftfilter 19 über eine Verbindungsleitung 21 in die Entfeuchtungseinheit 10. Die Rückluft strömt zunächst durch den Wärmetauscher 3a, in dem die Entfeuchtung stattfindet. Das sich bildende Kondensat kann über den Sammelraum 8 in das Auslassrohr 4 gelangen, das als Siphonrohr ausgebildet ist. Die Luft strömt im Wärmetauscher 3a nach unten und gelangt in den Strömungsraum 8. Dort wird die Luft zum Wärmetauscher 2a umgelenkt, den die Luft von unten nach oben durchströmt. Hierbei wird die Luft durch die Warmseite der Peltierelemente 26 vorgewärmt. In Strömungsrichtung hinter dem Wärmetauscher 2a ist entsprechend der Ausführungsform gemäß Fig. 6 das Gebläse 12 angeordnet, mit dem die vorgewärmte Luft in die Zuführleitung 30 gelangt. Die in ihr befindliche Heizeinrichtung 13 erwärmt die Luft vor dem Eintritt in den Vorratsbehälter 15. Entsprechend den vorigen Ausführungsformen tritt die erwärmte Luft durch das trichterförmige Auslassende 14 nach unten in das Schüttgut 16 ein, durch das die Luft nach oben strömt. Sie nimmt hierbei die Feuchtigkeit aus dem Schüttgut 16 auf und gelangt über den Auslass 18 und das Luftfilter 19 erneut in die Verbindungsleitung 21. Auf diese Weise wird die Trocknungsluft im Kreislauf geführt, wobei die in der Trocknungsluft befindliche Feuchtigkeit im Wärmetauscher 3a entfernt wird. Durch die Vorerwärmung beim Durchlauf durch den Wärmetauscher 2a und das Erwärmen durch die Heizeinrichtung 13 wird die Trocknungstemperatur so stark erwärmt, dass sie die Feuchtigkeit aus dem Schüttgut 16 optimal aufnehmen kann, ohne das Schüttgut durch eine zu starke Erwärmung zu schädigen.

Beim Ausführungsbeispiel nach Fig. 8 ist die Entfeuchtungseinheit 10 als Vorschaltgerät einem herkömmlichen Trockengerät für Schüttguter vorgeschaltet. Die dem Trockner vorgeschaltete Entfeuchtungseinheit sorgt dafür, dass die Außenluft vor dem Zutritt zum Trockner 33 ausreichend entfeuchtet ist. Diese Vorrichtung eignet sich vorteilhaft beim Einsatz in Gebieten, bei denen die Außenluft einen hohen Feuchtigkeitsgehalt aufweist. Solche Klimabedingungen treten beispielsweise in asiatischen Gebieten auf. Durch die Vorschaltung der Entfeuchtungseinheit 10 können die konventionellen Trockner verwendet werden, bei denen auf diese Weise eine erhebliche Leistungssteigerung der Energieeffizienz bei der Schüttguttrocknung erreicht wird.

Über den Luftfilter 11 wird mittels des Gebläses 12 im Trockner 33 Außenluft angesaugt. Die Luft durchströmt anschließend den Wärmetauscher 3a von oben nach unten und wird hierbei in der beschriebenen Weise entfeuchtet. Das sich bildende Kondensat kann über das Auslassrohr 4 abgeleitet werden. Die Außenluft gelangt anschließend in den Wärmetauscher 2a, den sie von unten nach oben durchströmt und durch den sie vorerwärmt wird. Die entfeuchtete, vorerwärmte Außenluft gelangt in eine Leitung 34, in der die Außenluft dem Trockner 33 zugeführt wird. In der Leitung 34 sitzt ein Ventil 35, mit dem die Zuführung der vorerwärmten, entfeuchteten Luft gesperrt werden kann.

Die Leitung 34 mündet in die Verbindungsleitung 21, die den Auslass 18 des Vorratsbehälters 15 für das Schüttgut 16 mit dem Trockner 33 verbindet. In der Verbindungsleitung 21 sitzt innerhalb des Trockners das Luftfilter 19, das dem Gebläse 12 vorgeschaltet ist. Die Leitung 34 mündet im Bereich zwischen dem Gebläse 12 und dem Luftfilter 19 in die Verbindungsleitung 21.

Innerhalb des Trockners 33 ist dem Gebläse 12 ein Wegeventil 36 nachgeschaltet, mit dem wahlweise zwei Trocknungspatronen 37, 38 zuschaltbar sind. Im dargestellten Ausführungsbeispiel ist das Wegeventil 36 so geschaltet, dass die vorerwärmte, entfeuchtete Luft durch die Trocknungspatrone 38 strömt. In Strömungsrichtung hinter der Trocknungspatrone 38 befindet sich eine Heizeinrichtung 39, mit der die Luft vor ihrem Eintritt in den Vorratsbehälter 15 auf die erforderliche Trocknungstemperatur erwärmt wird. Die vorerwärmte Luft gelangt in die Zuführleitung 30, in der sich die Heizeinrichtung 13 befindet. Die entsprechend erwärmte Trocknungsluft strömt im Vorratsbehälter 15 von unten nach oben durch das Schüttgut 16 und nimmt dessen Feuchtigkeit auf. Am Auslass 18 strömt die Rückluft über die Verbindungsleitung 21 und den Luftfilter 19 zurück in den Trockner 33. Das Ventil 35 in der Leitung 34 ist geschlossen, so dass dann keine neue Außenluft zugeführt wird, solange die Rückluft im Kreislauf durch den Trockner geführt wird. Die Rückluft wird bei ihrem erneuten Durchgang durch die Trocknungspatrone 38 in herkömmlicher Weise getrocknet, so dass sie nach dem erneuten Erwärmen mittels der Heizeinrichtungen 39 und 13 in den Vorratsbehälter 15 geleitet wird.

Das Wegeventil 36 kann so umgeschaltet werden, dass die Rückluft durch die Trocknungspatrone 37 geleitet und von dort an die Umgebung abgegeben wird. Wird das Wegeventil 36 wieder umgeschaltet, wird das Ventil 35 geöffnet, so dass mit dem Gebläse 12 Außenluft angesaugt wird, die zunächst durch die Entfeuchtungseinheit 10 strömt und dann in der beschriebenen Weise dem Vorratsbehälter 15 zugeführt wird.

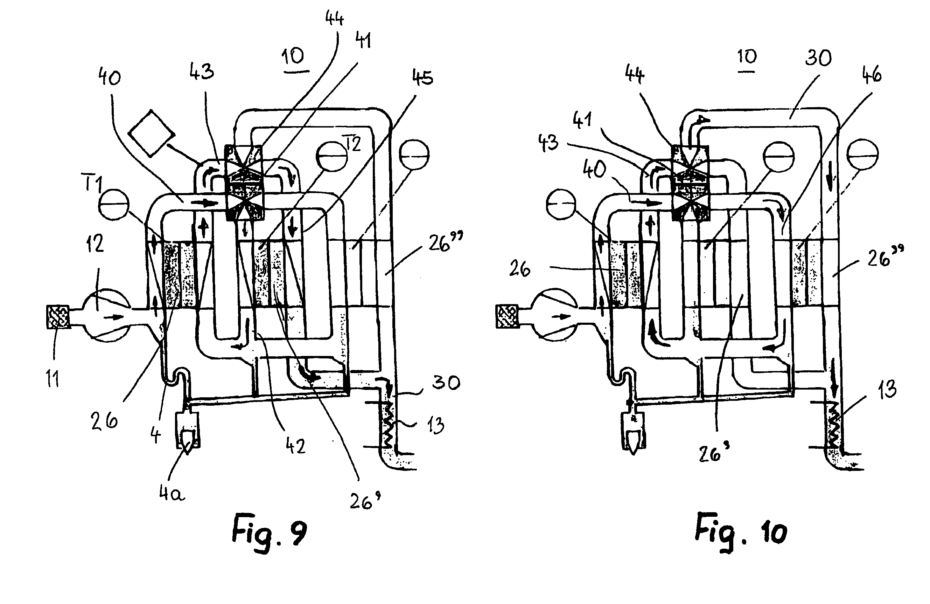

Das Ausführungsbeispiel nach den Fig. 9 und 10 ist für Systeme mit Taupunkten unter 0°C hervorragend geeignet. Mit der Entfeuchtungseinheit 10 wird eine zweistufige Entfeuchtung für die Trocknung des Schüttgutes 16 im Vorratsbehälter 15 durchgeführt. Die Entfeuchtungseinheit hat das Peltierelement 26, mit dem die Prozessluft vorentfeuchtet wird. Damit eine Vereisung verhindert wird, wird die Kaltseite des Peltierelementes 26 konstant auf einer Temperatur T1 gehalten, die im Ausführungsbeispiel +5°C beträgt. Die vom Gebläse 12 über das Luftfilter 11 angesaugte Außenluft strömt an dieser Kaltseite des Peltierelementes 26 vorbei. Das entstehende Kondensat kann nach unten in das Auslassrohr 4 abtropfen und in diesem Ausführungsbeispiel durch das Schwimmerventil 4a entnommen werden. Die Außenluft strömt längs der Kaltseite des Peltierelementes 26 aufwärts und tritt in eine Leitung 40 ein, in der sich ein Ventil 41 befindet. Es ist so geschaltet, dass die vorentfeuchtete Außenluft nach unten in eine Leitung 42 strömen kann. In der Leitung 42 strömt die Außenluft längs der Kaltseite des Peltierelementes 26' nach unten und gelangt in eine Rückführleitung 43. In ihr strömt die Luft, die nun durch die Entfeuchtung zur Trocknungsluft gewandelt wurde, aufwärts längs der Warmseite des Peltierelementes 26, wodurch die Trocknungsluft vorerwärmt wird. In der Rückführleitung 43 sitzt ein Ventil 44, über das die Trocknungsluft in eine weitere Leitung 45 strömt. Hierbei wird die Trocknungsluft längs der Warmseite des Peltierelementes 26' geführt und gelangt dann in die Zuführleitung 30, über welche die Trocknungsluft in den (nicht dargestellten) Vorratsbehälter 15 strömt. Mit der Heizeinrichtung 13 in der Zuführleitung 30 wird die entfeuchtete und vorerwärmte Trocknungsluft auf die zum Trocknen des Schüttgutes 16 im Vorratsbehälter 15 erforderliche Temperatur erwärmt.

Das Peltierelement 26' wird auf einer möglichst tiefen Temperatur, vorzugsweise unter 0°C, gehalten, um einen entsprechend tiefen Taupunkt zu erreichen. Dadurch entsteht am Peltierelement 26' eine Vereisung.

Parallel hierzu wird die Kaltseite des Peltierelementes 26" durch eine kurzzeitige Polumkehr der Lastspannung kurzzeitig erwärmt und damit enteist. Während somit die entfeuchtete Trocknungsluft an den Warmseiten der Peltierelemente 26, 26' vorbeigeführt und erwärmt wird, wird in dieser Phase das Peltierelement 26" in der beschriebenen Weise enteist. Während dieses Regeneriervorganges ist dieses Peltierelement 26" aus dem Strömungsweg der Luft in der Entfeuchtungseinheit 10 abgekoppelt.

Ist das Peltierelement 26" enteist, werden die beiden Ventile 41, 44 umgeschaltet (Fig. 10). Nunmehr strömt die entfeuchtete Außenluft in der Leitung 40 durch das Ventil 41 in eine Leitung 46, in der die Luft an der Kaltseite des Peltierelementes 26" vorbeigeführt wird. Durch das Umschalten des Ventils 41 ist das Peltierelement 26' aus dem Strömungsweg der Luft herausgenommen. Dieses Peltierelement 26' wird durch kurzzeitige Polumkehrung so geschaltet, dass die Kaltseite nunmehr die Warmseite wird. Dadurch wird die Vereisung, die sich aufgrund des Entfeuchtens der Luft an der Kaltseite dieses Peltierelementes 26' gebildet hat, entfernt. Ist dieser Enteisungsvorgang abgeschlossen, werden die Ventile 41, 44 wieder umgeschaltet, so dass nunmehr das Peltierelement 26" enteist werden kann. Auf diese Weise werden im Wechsel die Peltierelemente 26' und 26" jeweils enteist.

Während des Enteisungsvorganges des Peltierelementes 26' ist das Ventil 44 so umgeschaltet, dass die über die Rückführleitung 43 zugeführte und entfeuchtete Trocknungsluft nach dem Vorbeiführen an der Warmseite des Peltierelementes 26 in die Zuführleitung 30 gelangt, in der die Trocknungsluft mit Hilfe der Warmseite von Peltierelement 26" und der Heizeinrichtung 13 auf die zum Trocknen des Schüttgutes im Vorratsbehälter erforderliche Temperatur erwärmt wird.

Diese zweistufige Peltierentfeuchtung kann in einem offenen Prozess wie anhand der Fig. 9 und 10 beschrieben, oder auch mit einem geschlossenen Prozess, vorgenommen werden.

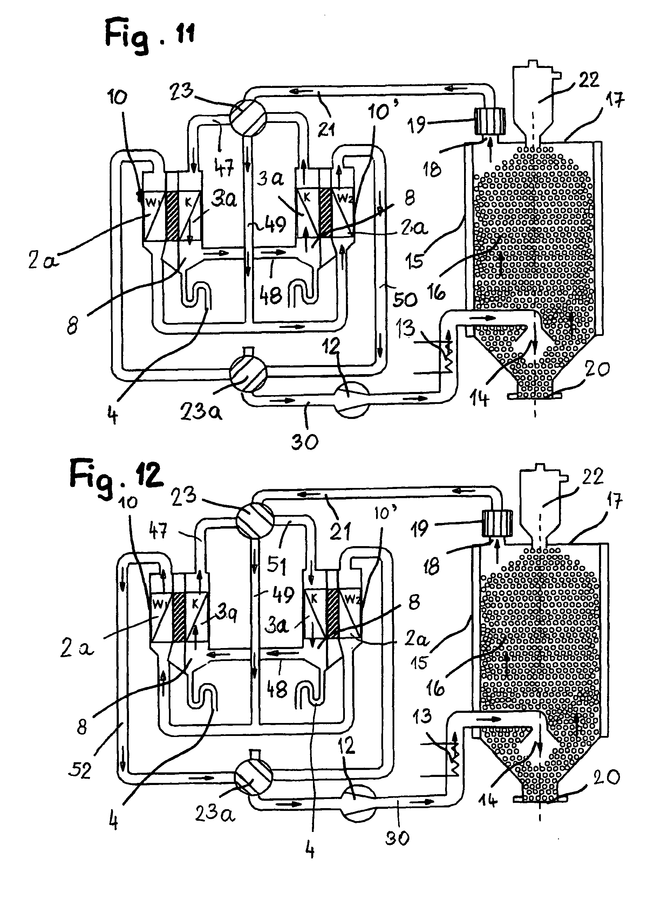

Beim Ausführungsbeispiel nach den Fig. 11 und 12 handelt es sich um ein geschlossenes System mit Taupunkten unterhalb des Gefrierpunktes. Die Vorrichtung hat die beiden Entfeuchtungseinheiten 10, 10' mit den Peltierelementen.

Das im Vorratsbehälter 15 befindliche Schüttgut 16 wird von der erwärmten, entfeuchteten Luft aufwärts durchströmt. Über den Auslass 18 im Deckel 17 des Vorratsbehälters 15 und den Luftfilter 19 gelangt die Luft in die Verbindungsleitung 21.

Auf dem Deckel 17 des Vorratsbehälters 15 sitzt eine Befüllvorrichtung 22, über die der Vorratsbehälter 15 mit dem Schüttgut 16 befüllt wird. Die Befüllvorrichtung 22 ist in bekannter Weise ausgebildet.

Das Ventil 23 ist so geschaltet, dass die Verbindungsleitung 21 mit einer Zuführleitung 47 strömungsverbunden ist. Über sie wird die Rückluft aus dem Vorratsbehälter 15 dem Wärmetauscher 3a der Entfeuchtungseinheit 10 zugeführt. In dieser Entfeuchtungseinheit ist das Peltierelement nicht in Betrieb. Aber da es sich um einen wechselnden Prozess zwischen Fig. 11 und Fig.12 handelt, ist diese Kammer nach dem vorherigen Prozessablauf in Fig. 12 vereist. Die Rückluft durchströmt den Wärmetauscher 3a von oben nach unten, wobei die Feuchte am Eis kondensiert und gleichzeitig die Vereisung durch die warme Rückluft und ebenfalls durch die Kondensationswärme abtaut. Das im Wärmetauscher 3a sich bildende Kondensat kann über das Auslassrohr 4 mit dem Siphon abgelassen werden.

Nach dem Austritt aus dem Wärmetauscher 3a strömt die vorentfeuchtete Rückluft über den Strömungsraum 8 in eine Verbindungsleitung 48, die in den Strömungsraum 8 der anderen Entfeuchtungseinheit 10' mündet. Die entfeuchtete Rückluft strömt durch den Wärmetauscher 3a dieser weiteren Entfeuchtungseinheit 10 aufwärts und wird über das Ventil 23 in eine Leitung 49 geleitet, in der die Rückluft dem Wärmetauscher 3a der Entfeuchtungseinheit 10' zugeführt wird. In diesem zweiten kalten Wärmetauscher 3a wird die Feuchte aus der Rückluft durch Eisbildung an dem Wärmetauscher vom Peltierelement abgeführt und damit sehr geringe Taupunkte erreicht. Die entfeuchtete Rückluft wird damit zur Trocknungsluft, durchströmt den Wärmetauscher 2a von unten nach oben, wird erwärmt und gelangt in eine Rückführleitung 50, in der die entfeuchtete, vorerwärmte Trocknungsluft über ein Ventil 23a der Zuführleitung 30 zugeführt wird. In ihr sitzt das Gebläse 12. Mit der Heizeinrichtung 13 in der Zuführleitung 30 wird die Trocknungsluft vor dem Eintritt in den Vorratsbehälter 15 auf die zum Trocknen des Schüttgutes 16 erforderliche Temperatur erwärmt. Sie tritt innerhalb des Vorratsbehälters 15 aus dem Auslassende 14 der Zuführleitung 30 nach unten aus und durchströmt das Schüttgut 16 von unten nach oben.

Auf die beschriebene Weise wird die Trocknungsluft im Kreislauf geführt.

Mit der Befüllvorrichtung 22 wird das Schüttgut 16 chargenweise in den Vorratsbehälter 16 eingebracht. Über den Behälterauslass 20 wird das Schüttgut ebenfalls chargenweise nach dem Trocknungsvorgang abgeführt.

Die Befüllvorrichtung 22 kann auch bei den zuvor sowie nachfolgend beschriebenen Ausführungsformen eingesetzt werden.

Durch die Hintereinanderschaltung der beiden Entfeuchtungseinheiten 10, 10' ergibt sich eine erhöhte Entfeuchtungsleistung und damit eine wesentliche Verbesserung des Entfeuchtungsprozesses. Vor allem wird durch das Abtauen des Eises mittels Rückluftwärme und Kondensationswärme die Regeneration der vereisten Kammer besonders energiesparend durchgeführt.

Über das Ventil 23 wird die Rückluft über die Zuführleitung 47 dem Wärmetauscher 3a zugeführt. Die sich an der Kaltseite des Wärmetauschers 3a bildende Vereisung wird während des zuvor kurz beschriebenen Prozessschrittes enteist. Die feuchte Rückluft aus dem Vorratsbehälter 15 enthält noch erhebliche Restwärme aus dem Trocknungsprozess von der Trocknung des Schüttgutes 16. Die warme Rückluft sowie die Kondensation der Feuchtigkeit und der dabei freiwerdenden Kondensationswärme führt dazu, dass das Eis geschmolzen und das Kondensat über das Auslassrohr 4 aus dem System abgeführt werden kann. Durch diese Kondensation wird die feuchte Rückluft getrocknet und gekühlt. Dieser Prozess wird so lange durchgeführt, bis das gebildete Eis im Wärmetauscher 3a vollständig entfernt und sich im Wärmetauscher 3a der Entfeuchtungseinheit 10' genügend Eis gesammelt hat, das nunmehr entfernt werden muss.

Zu diesem Zweck wird mit Hilfe des Ventils 23 die Strömungsrichtung der aus dem Vorratsbehälter 15 kommenden Rückluft geändert (Fig. 12). Die Rückluft gelangt nunmehr aus der Verbindungsleitung 21 in eine Zuführleitung 51, über die die Rückluft dem Wärmetauscher 3a der Entfeuchtungseinheit 10' zugeführt wird. Die Rückluft durchströmt den Wärmetauscher 3a von oben nach unten. Hierbei wird die feuchte Rückluft entfeuchtet und das Eis aus dem vorherigen Prozessschritt aufgetaut. Das entstehende Kondensat kann nach unten in das Auslassrohr 4 gelangen. Nach dem Durchtritt durch den Wärmetauscher 3a strömt die entfeuchtete Rückluft über den Strömungsraum 8 in die Verbindungsleitung 48. Im Unterschied zur Schaltstellung des Ventils 23 in Fig. 11 durchströmt die entfeuchtete Rückluft die Verbindungsleitung 48 in umgekehrter Richtung und gelangt über den Strömungsraum der Entfeuchtungseinheit 10 in deren Wärmetauscher 3a, dessen Peltierelement nun in Betrieb ist. Beim Durchströmen dieses Wärmetauschers 3a von unten nach oben wird die Rückluft weiter entfeuchtet und Eis gebildet. Über die Zuführleitung 47 und das Ventil 23 strömt die Rückluft, die nun durch die Entfeuchtung zur Trocknungsluft gewandelt wurde, in die Leitung 49 und von dort durch den Wärmetauscher 2a der Entfeuchtungseinheit 10. Im Wärmetauscher 2a wird die Trocknungsluft vorerwärmt. Sie durchströmt den Wärmetauscher 2a von unten nach oben und gelangt in eine Verbindungsleitung 52, in der die vorerwärmte Trocknungsluft über das umgeschaltete Ventil 23a in die Zuführleitung 30 strömt. Vor dem Eintritt in den Vorratsbehälter 15 wird die vorerwärmte Trocknungsluft durch die Heizeinrichtung 13 auf die zum Trocknen des Schüttgutes 16 notwendige Temperatur erwärmt. Sie tritt aus dem Auslassende 14 innerhalb des Vorratsbehälters 15 aus und durchströmt das Schüttgut 16 aufwärts. Hierbei nimmt sie die Feuchtigkeit aus dem Schüttgut 16 auf. Die feuchte Rückluft wird dann über den Auslass 18 und den Luftfilter 19 zurück in die Verbindungsleitung 21 geführt, um die Rückluft einem erneuten Trocknungskreislauf zu unterziehen.

Es werden stets beide Ventile 23, 23a zwischen den Schaltstellungen gemäß Fig. 11 und gemäß Fig. 12 geschaltet. Nach dem Durchlauf der Rückluft durch die Wärmetauscher 3a der Entfeuchtungseinheiten 10, 10' wird die entfeuchtete Rückluft, die dann Trocknungsluft ist jeweils durch die Warmseite in Form der Wärmetauscher 2a geleitet, um dort die Abwärme und die Verlustleistung vom Kühlprozess aufzunehmen.

In der Ventilstellung gemäß Fig. 11 wird die Trocknungsluft nicht über den Wärmetauscher 2a der Entfeuchtungseinheit 10 geführt, da dort das Enteisen nur passiv durchgeführt wird und aus diesem Grunde dieser Leitungsteil am Ventil 23a blockiert ist. Die über die Warmseite (Wärmetauscher 2a) der Entfeuchtungseinheit 10' geführte Rückluft wird über das entsprechend geschaltete Ventil 23a in die Zuführleitung 30 geleitet.

Wenn der beschriebene Enteisungsprozess in den beiden Entfeuchtungseinheiten 10, 10' bzw. deren Wärmetauschern 3a durchgeführt werden soll, werden die Ventile 23, 23a gleichzeitig umgeschaltet.

Im dargestellten Ausführungsbeispiel befindet sich das Gebläse in Strömungsrichtung hinter dem Ventil 23a. Das Gebläse 12 könnte durchaus auch in Strömungsrichtung vor dem Ventil 23 in der Verbindungsleitung 21 liegen. Das Gebläse 12 drückt die getrocknete Luft über die Heizeinrichtung 13 in der beschriebenen Weise wieder in den Vorratsbehälter 15, um das Schüttgut 16 zu entfeuchten.

Der beschriebene Prozess wird kontinuierlich wiederholt. Die Häufigkeit des Umschaltens der Ventile 23, 23a wird an die anfallende feuchte Menge aus dem Schüttgut 16 angepasst.

Die beschriebene Vorrichtung ist ein geschlossenes System mit Taupunkten unterhalb des Gefrierpunktes.

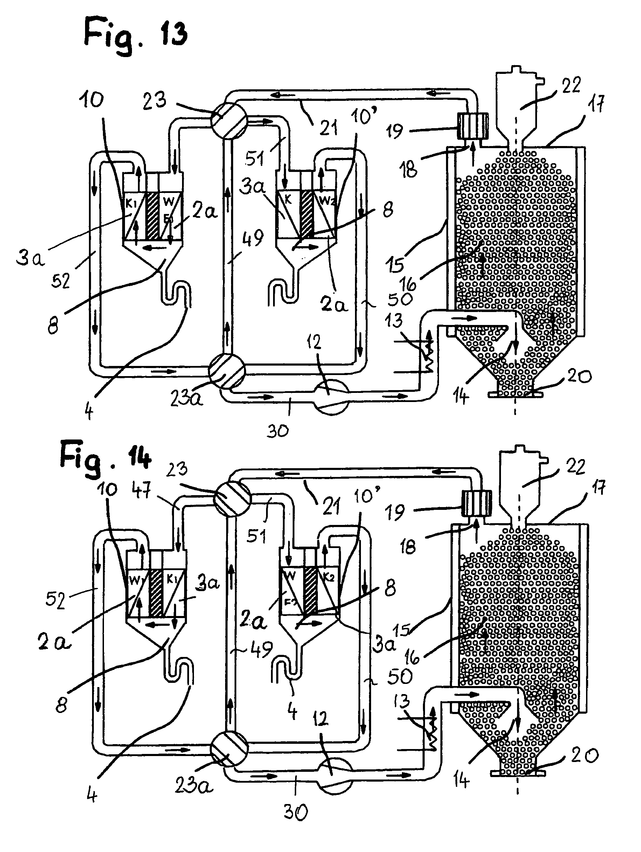

Während bei der Ausführungsform nach den Fig. 11 und 12 das Auftauen passiv durch Durchleiten der feuchten Rückluft durch die Wärmetauscher 3a erfolgt, wird der Auftauvorgang bei der Ausführungsform gemäß den Fig. 13 und 14 aktiv durchgeführt, indem die Peltierelemente der Entfeuchtungseinheiten so umgepolt werden, dass die Kaltseite der Peltierelemente zur Wärmeseite wird. Dabei wird die bisherige Warmseite zur Kaltseite der Peltierelemente. Die Vorrichtung gemäß den Fig. 13 und 14 ist grundsätzlich gleich ausgebildet wie das vorige Ausführungsbeispiel. Die über den Auslass 18 und den Luftfilter 19 aus dem Vorratsbehälter 15 austretende Rückluft strömt über die Verbindungsleitung 21 und das Ventil 23 zum Wärmetauscher 2a der Entfeuchtungseinheit 10. Im Unterschied zur vorigen Ausführungsform sind die Peltierelemente der Entfeuchtungseinheit 10 umgepolt, so dass die bisherige Kaltseite nunmehr die Warmseite der Peltierelemente ist. Dementsprechend wird das Eis auf der bisherigen Kaltseite durch die warme Rückluft, durch das Kondensieren und das Freiwerden der Kondensationswärme abgeschmolzen. Der Wärmetauscher 2a wird von der Rückluft von oben nach unten durchströmt und gelangt über den Strömungsraum 8 zum Wärmetauscher 3a. Hier strömt die Rückluft aufwärts und gelangt über die Verbindungsleitung 52 und das Ventil 23a in die Leitung 49. Das im Wärmetauscher 3a sich bildende Kondensat kann über den Sammelraum 8 in das Auslassrohr 4 gelangen, über das das Kondensat dem Prozess entzogen wird.

Die Rückluft wird beim Durchströmen des Wärmetauschers 3a gekühlt. Dadurch nimmt die Lufttemperatur weiter ab. Hierbei wird ebenfalls Kondensat ausgeschieden, das über den Sammelraum 8 in das Auslassrohr 4 gelangen kann. Die Kühltemperatur wird begrenzt, damit im Wärmetauscher 3a keine Vereisung auftritt.

Die Rückluft strömt in der Leitung 49 über das Ventil 23 und die Zuführleitung 51 in den Wärmetauscher 3a der Entfeuchtungseinheit 10'. Beim Durchgang durch den Wärmetauscher 3a wird die Feuchte aus der Rückluft entfernt und als Eis auf der Kaltseite der Peltierelemente abgeschieden. Die Rückluft durchströmt den Wärmetauscher 3a von oben nach unten, wird durch die Entfeuchtung zur Trocknungsluft und gelangt über den Strömungsraum in den Wärmetauscher 2a, der von der Trocknungsluft von unten nach oben durchströmt wird. Die auf diese Weise vorgewärmte Trocknungsluft strömt über die Rückführleitung 50 und das Ventil 23a in die Zuführleitung 30. Mit der Heizeinrichtung 13 wird die Trocknungsluft vor ihrem Eintritt in den Vorratsbehälter 15 auf die erforderliche Temperatur erwärmt. Die erwärmte Trocknungsluft tritt aus dem Auslassende 14 im Vorratsbehälter 15 aus und durchströmt das Schüttgut 16 nach oben. Sie nimmt die Feuchtigkeit aus dem Schüttgut 16 auf und strömt am Auslass 18 als feuchte Rückluft zurück in die Verbindungsleitung 21.

In der Stellung gemäß Fig. 14 sind die beiden Ventile 23, 23a umgeschaltet. Dies hat zur Folge, dass die aus dem Auslass 18 austretende feuchte Rückluft über die Verbindungsleitung 21 und das Ventil 23 in die Zuführleitung 51 strömt. Die feuchte Rückluft gelangt über die Zuführleitung 51 in den Wärmetauscher 2a der Entfeuchtungseinheit 10'. Die Peltierelemente beider Entfeuchtungseinheiten 10' und 10 sind umgepolt worden, so dass die bisherigen Kaltseiten nunmehr die Warmseiten sind. Dementsprechend wird durch die feuchte, warme Rückluft das auf der bisherigen Kaltseite befindliche Eis abgetaut. Das entstehende Kondensat kann nach unten in das Auslassrohr 4 gelangen. Über den Strömungsraum 8 strömt die teilweise entfeuchtete Rückluft von unten nach oben durch den Wärmetauscher 3a der Entfeuchtungseinheit 10', wobei die Rückluft weiter gekühlt und weiteres Kondensat abgeschieden wird. Über die Rückführleitung 50 und das Ventil 23a strömt die Rückluft in die Leitung 49, in der sie über das Ventil 23 und die Zuführleitung 47 in den Wärmetauscher 3a der Entfeuchtungseinheit 10 strömt. Der Wärmetauscher 3a wird von oben nach unten durchströmt, wobei die restliche Feuchte aus der Rückluft durch Eisbildung an dem kalten Wärmetauscher 3a abgeschieden wird. Die entfeuchtete Rückluft ist nun durch die Entfeuchtung zur Trocknungsluft gewandelt worden und strömt dann aufwärts zur Vorwärmung durch den Wärmetauscher 2a der Entfeuchtungseinheit 10 und strömt über die Verbindungsleitung 52 und das Ventil 23a in die Zuführleitung 30, in der das Gebläse 12 sitzt. Mit der Heizeinrichtung 13 wird die Trocknungsluft vor dem Eintritt in den Vorratsbehälter 15 auf die zum Trocknen des Schüttgutes erforderliche Temperatur erwärmt. Die erwärmte Trocknungsluft tritt über das Auslassende 14 in den Vorratsbehälter ein und durchströmt das Schüttgut 16 nach oben. Über den Auslass 18 gelangt die feuchte Rückluft wieder in die Verbindungsleitung 21.

Die Ventile 23, 23a werden abwechselnd umgeschaltet, um die Vereisung und Enteisung im Wechsel durchzuführen.

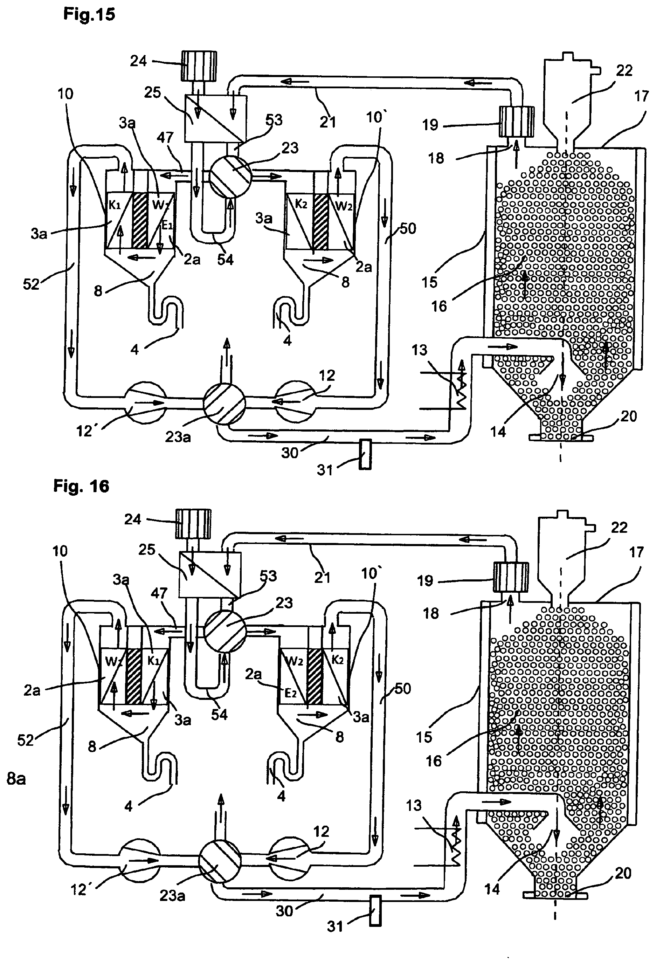

Die Vorrichtung nach den Fig. 15 und 16 ermöglicht einen Trocknungsvorgang mit Taupunkten der Trocknungsluft unterhalb des Gefrierpunktes, wobei das entstehende Eis auf der Kaltseite der Peltierelemente aktiv aufgetaut wird, indem die Peltierelemente umgepolt werden und gleichzeitig Abwärme aus der Rückluft über einen Wärmetauscher 25 genutzt wird. Außerdem erfolgt die Regenerierung und Trocknung in getrennten Kreisläufen.

Bei diesem Ausführungsbeispiel wird ein getrennter Luftkreislauf aufgebaut, um das in den Entfeuchtungseinheiten 10, 10' sich bildende Eis abzutauen. Die aus dem Vorratsbehälter 15 nach dem Durchströmen des Schüttgutes 16 über den Auslass 18 und den Luftfilter 19 in die Verbindungsleitung 21 austretende feuchte Rückluft wird einem Wärmetauscher 25 zugeführt. Über einen Luftfilter 24 wird dem Wärmetauscher 25 außerdem Außenluft zugeführt. Die feuchte Rückluft wird beim Durchgang durch den Wärmetauscher 25 gekühlt. Gleichzeitig wird die über den Luftfilter 24 angesaugte Außenluft im Wärmetauscher 25 vorgewärmt, um nachfolgend die Vereisung auf der Kaltseite der Peltierelemente zu beseitigen.

Nach dem Durchtritt durch den Wärmetauscher 25 gelangt die Luft in eine Leitung 53, in der das Ventil 23 sitzt. Es ist so geschaltet, dass die Rückluft zum Wärmetauscher 3a der Entfeuchtungseinheit 10' gelangt. Die Rückluft durchströmt den Wärmetauscher 3a von oben nach unten und wird hierbei abgekühlt und durch Kondensation oder Vereisung der Feuchte getrocknet. Das sich bildende Kondensat kann nach unten in das Auslassrohr 4 gelangen, sich bildendes Eis lagert sich im Wärmetauscher ab. Über den Strömungsraum 8 strömt die zum Großteil entfeuchtete Rückluft in den Wärmetauscher 2a der Entfeuchtungseinheit 10' und ist durch die Entfeuchtung nun zur Trocknungsluft gewandelt worden. Die Trocknungsluft durchströmt den Wärmetauscher 2a von unten nach oben, tritt in die Rückführleitung 50 ein und wird über das Gebläse 12 geleitet, das über das Ventil 23a mit der Zuführleitung 30 strömungsverbunden ist. Vor dem Eintritt in den Vorratsbehälter 15 wird die entfeuchtete und vorerwärmte Trocknungsluft mittels der Heizeinrichtung 13 auf die zum Trocknen des Schüttgutes erforderliche Temperatur erwärmt. Über das Auslassende 14 tritt die erwärmte Trocknungsluft in den Vorratsbehälter 15 ein und durchströmt das Schüttgut 16 nach oben. Über den Auslass 18 und den Luftfilter 19 strömt die mit Feuchtigkeit beladene Trocknungsluft als Rückluft in die Verbindungsleitung 21. In der beschriebenen Weise wird die Rückluft im Kreislauf durch die Vorrichtung geführt, wobei sie entfeuchtet, vorgewärmt und auf die zum Trocknen des Schüttgutes 16 erforderliche Temperatur erwärmt wird.

Die über den Luftfilter 24 in den Wärmetauscher 25 angesaugte Außenluft gelangt nach Durchströmen des Wärmetauschers in eine Leitung 54, die über das Ventil 23 mit der Zuführleitung 47 zur Entfeuchtungseinheit 10 strömungsverbunden ist. Die im Wärmetauscher 25 erwärmte Außenluft strömt von oben nach unten durch den Wärmetauscher 2a der Entfeuchtungseinheit 10. Das Peltierelement der Entfeuchtungseinheit 10 wird umgepolt, so dass die bisherige Kalt- zur Warmseite wird. Das auf der bisherigen Kaltseite gebildete Eis wird durch die neue Warmseite vom Peltierelement und die vorgewärmte Außenluft beim Durchgang durch den Wärmetauscher 2a aufgetaut. Die Außenluft wird über den Strömungsraum 8 nach dem Durchtritt durch den Wärmetauscher 2a in den Wärmetauscher 3a geleitet, den sie nach oben durchströmt. Die gekühlte Außenluft wird über die Verbindungsleitung 52 abgeführt und über das Ventil 23a in die Umgebung ausgetragen. In der Verbindungsleitung 52 sitzt das Gebläse 12', mit dem die Außenluft angesaugt wird. Das in der Zuführleitung 50 sitzende Gebläse 12 treibt die entfeuchtete und vorgewärmte Trocknungsluft an. Die Gebläse könnten auch für den Trocknungskreis in der Leitung 21 und für die Regeneration bzw. Enteisung in der Leitung 54 oder an anderen Orten, die den Zweikreisbetrieb ermöglichen, vorgesehen werden.

Die Enteisung in der Entfeuchtungseinheit 10 wird lufttechnisch getrennt in der beschriebenen Weise vom Trocknungsvorgang durchgeführt. Die Regeneration der jeweiligen Entfeuchtungseinheit 10, 10' erfolgt hierbei parallel zum Trocknen des Schüttgutes 16.

Mit der Zeit tritt an der Kaltseite der Peltierelemente der Entfeuchtungseinheit 10' eine Vereisung auf. Mit zunehmender Stärke der Vereisung nimmt die Entfeuchtungsleistung der Entfeuchtungseinrichtung ab. Eine Möglichkeit die Regeneration durchzuführen, ist es, nach bestimmten Zeitintervallen den Prozess umzuschalten und die Enteisung durchzuführen. Es ist auch möglich, in der Zuführleitung 30 den Taupunkt mit einem entsprechenden Sensor 31 zu messen und dann den Prozesskreis von Fig. 15 auf Fig. 16, oder umgekehrt, umzuschalten, wenn der minimale Soll-Taupunkt nicht mehr gehalten werden kann. Um die Vereisung zu beseitigen, werden die Ventile 23, 23a umgestellt, so dass die Rückluft sowie die angesaugte Außenluft einen anderen Strömungsverlauf haben (Fig. 16). Die aus dem Vorratsbehälter 15 nach dem Durchströmen des Schüttgutes 16 am Auslass 18 austretende feuchte Rückluft gelangt über den Luftfilter 19 in die Verbindungsleitung 21, mit der die feuchte Rückluft dem Wärmetauscher 25 zugeführt wird. Aufgrund der Umschaltung des Ventils 23 strömt die durch den Wärmetauscher 25 abgekühlte feuchte Rückluft über die Zuführleitung 47 durch den Wärmetauscher 3a der Entfeuchtungseinheit 10. Die Rückluft durchströmt den Wärmetauscher 3a von oben nach unten und wird hierbei gekühlt und die Feuchte durch Kondensation und Vereisen wie beschrieben zum Großteil aus der Rückluft abgeschieden. Über den Strömungsraum 8 gelangt die Rückluft in den Wärmetauscher 2a der Entfeuchtungseinheit 10. Der Wärmetauscher 2a wird von unten nach oben durchströmt, wobei sich die Rückluft erwärmt. Die getrocknete Rückluft wird so in erwärmte Trocknungsluft gewandelt. Über die Verbindungsleitung 52, das Gebläse 12' und das umgeschaltete Ventil 23a gelangt die Trocknungsluft in die Zuführleitung 30. Mit der Heizeinrichtung 13 wird die Trocknungsluft auf die zum Trocknen des Schüttgutes 16 erforderliche Temperatur erwärmt. Die Trocknungsluft tritt über das Auslassende 14 in den Vorratsbehälter 15 ein und durchströmt das Schüttgut 16 nach oben. Die nach dem Durchströmen des Schüttgutes 16 feuchte Rückluft wird über den Auslass 18 und den Luftfilter 19 und über die Verbindungsleitung 21 wiederum dem Wärmetauscher 25 zugeführt.

Die über den Luftfilter 24 angesaugte Außenluft durchströmt ebenfalls den Wärmetauscher 25 und wird hierbei erwärmt. Über die Leitung 54 und das umgeschaltete Ventil 23 strömt die erwärmte Außenluft in den Wärmetauscher 2a der Entfeuchtungseinheit 10'. Hierbei wird durch die erwärmte Außenluft und durch die Umpolung des Peltierelementes der Entfeuchtungseinheit 10' die Vereisung aus der vorherigen Prozessschaltung Fig. 15 aufgetaut. Das sich bildende Kondensat gelangt in das Auslassrohr 4, über das das Kondensat dem System entzogen werden kann. Die Außenluft strömt über den Strömungsraum 8 zum Wärmetauscher 3a der Entfeuchtungseinheit 10'. Die Peltierelemente der Entfeuchtungseinheit 10' sind hierbei umgepolt, um das Enteisen zu beschleunigen. Die Außenluft wird über die Rückführleitung 50, das Gebläse 12 und das umgeschaltete Ventil 23a an die Umgebung abgegeben.

Durch Umschalten der Ventile 23, 23a werden die beiden Entfeuchtungseinheiten 10, 10' abwechselnd mit der Außenluft enteist, während parallel und gleichzeitig die Trocknung des Schüttgutes 16 durchgeführt wird.

Entsprechend dem Ausführungsbeispiel nach den Fig. 11 und 12 ist auch bei den Ausführungsbeispielen nach den Fig. 13 bis 16 die Befüllvorrichtung 22 am Deckel 17 des Vorratsbehälters 15 vorgesehen, mit der eine chargenweise Befüllung des Vorratsbehälters 15 mit Schüttgut möglich ist. Die Befüllvorrichtung 22 ist eine vorteilhafte Ausgestaltung aller Vorratsbehälter und ist auch bei den Fig. 4, 5, 6 und 7 möglich. Die Befüllung kann aber auch ohne solche Befüllvorrichtungen 22 in anderer Weise durchgeführt werden.

Entsprechend dem Ausführungsbeispiel nach den Fig. 15 und 16 ist auch bei den Ausführungsbeispielen nach den Fig. 11 bis 14 die Umschaltung vom Prozesskreis zur Regeneration beziehungsweise der Enteisung entweder nach Zeitintervallen durchführbar oder, indem der Taupunkt der Trockenluft in der Zuführleitung 30 mittels Taupunktsensor 31 gemessen wird und so beim Unterschreiten einer bestimmten Entfeuchtungsleistung die Umschaltung erfolgt.

## Patentansprüche

1. Vorrichtung zum Trocknen von Schüttgut in wenigstens einem Vorratsbehälter, in den wenigstens eine Zuführleitung für ein gasförmiges Trocknungsmedium, vorzugsweise Luft, mündet und an den wenigstens eine Auslassleitung angeschlossen ist, in die das Trocknungsmedium als mit Feuchtigkeit beladene Rückluft nach Durchströmen des Schüttgutes gelangt, und mit wenigstens einer Entfeuchtungseinheit, mit der das Trocknungsmedium entfeuchtet wird,
**dadurch gekennzeichnet, dass** die Entfeuchtungseinheit (10, 10') wenigstens ein Peltierelement (26, 26', 26") aufweist, dessen Kalt- und dessen Warmseite im Strömungsweg des Trocknungsmediums liegen.

2. Vorrichtung nach Anspruch 1,
**dadurch gekennzeichnet, dass** die Kalt- und die Warmseite des Peltierelementes (26, 26', 26") Teil jeweils eines Wärmetauschers (2a, 3a) sind.

3. Vorrichtung nach Anspruch 1 oder 2,
**dadurch gekennzeichnet, dass** mit der Entfeuchtungseinheit (10, 10') die Zuführleitung (30) strömungsverbunden ist.

4. Vorrichtung nach einem der Ansprüche 1 bis 3,
**dadurch gekennzeichnet, dass** die Entfeuchtungseinheit (10, 10') mit der Auslassleitung (21) des Vorratsbehälters (15) strömungsverbunden ist.

5. Vorrichtung nach einem der Ansprüche 1 bis 4,
**dadurch gekennzeichnet, dass** an die Entfeuchtungseinheit (10, 10') wenigstens eine Ansaugleitung (5) für Außenluft angeschlossen ist.

6. Vorrichtung nach einem der Ansprüche 1 bis 5,
**dadurch gekennzeichnet, dass** die Entfeuchtungseinheit (10, 10') als Vorschalteinheit an der Vorrichtung vorgesehen ist.

7. Vorrichtung nach einem der Ansprüche 1 bis 6,
**dadurch gekennzeichnet, dass** die Entfeuchtungseinheit (10, 10') in einem Kreislauf des Trocknungsmediums liegt.

8. Vorrichtung nach einem der Ansprüche 1 bis 7,
**dadurch gekennzeichnet, dass** die Vorrichtung wenigstens zwei Entfeuchtungseinheiten (10, 10') aufweist, von denen die eine Entfeuchtungseinheit einem Enteisungsprozess unterworfen und die andere Entfeuchtungseinheit parallel zum Entfeuchten des Trocknungsmediums eingesetzt wird.

9. Vorrichtung nach Anspruch 8,
**dadurch gekennzeichnet, dass** der Strömungsweg des Trocknungsmediums mittels Ventilen (23, 23a) umschaltbar ist.

10. Vorrichtung nach einem der Ansprüche 1 bis 9,
**dadurch gekennzeichnet, dass** die Entfeuchtungseinheit (10, 10') mehrere neben- und/oder hintereinander angeordnete Peltierelemente (26) aufweist.
